# FASCICULE DE BREVET EUROPEEN

(11) **EP 2 042 303 B1**
(45) Date de publication et mention de la délivrance du brevet: **01.08.2012**
(21) Numéro de dépôt: 08163460.2
(22) Date de dépôt: 02.09.2008
(51) Int. Cl.: B32B 37/02, B32B 38/14

(54) **Installation pour la finition en continu de matériaux de recouvrement de panneaux ou de moulures**
Anlage zur kontinuierlichen Endbearbeitung von Abdeckmaterialien für Paneele oder Leisten
Installation for continuous finishing of materials for covering panels or mouldings

(30) Priorité: 26.09.2007 ES 200702517
(43) Date de publication de la demande: 01.04.2009
(73) Titulaire: Barberan Latorre, Jesús Francisco, 08860 Castelldefels (Barcelona) (ES)
(72) Inventeur: Barberan Latorre, Jesús Francisco, 08860 Castelldefels (Barcelona) (ES)
(74) Mandataire: Besnard, Christophe Laurent

(56) Documents cités:
- EP-A- 1 180 431
- DE-A1- 10 104 296
- DE-A1- 10 256 040
- US-A- 3 660 200
- US-A1- 2004 115 398

## Description

### Domaine technique

La présente invention concerne la préparation de matériaux laminaires destinés au recouvrement de panneaux ou de moulures, afin d'apporter à ceux-ci une surface protégée et décorative, en proposant une installation qui permet de réaliser tout le processus de préparation desdits matériaux de recouvrement en une séquence continue, pour l'incorporation desdits matériaux déjà préparés sur les panneaux ou moulures d'application.

### État de la technique

L'application d'un recouvrement de surface sur les panneaux, moulures, etc., en aggloméré de bois, contreplaqué, aluminium, PVC et autres matériaux, avec une feuille de papier, bois ou autres, pour obtenir une surface décorative et protégée sur lesdits éléments d'application, est connue.

L'incorporation d'une couche de colle-vernis sur les matériaux laminaires de recouvrement, pour doter ces matériaux d'une consistance structurelle appropriée aux recouvrements à appliquer est également connue.

Dans la pratique conventionnelle, l'application desdits recouvrements s'effectue en incorporant les feuilles de recouvrement sur les éléments d'application pour ensuite, avec le recouvrement disposé sur l'élément d'application, effectuer une préparation de la surface du recouvrement, et appliquer sur la surface préparée la teinture, les impressions et le vernissage qui confèrent la finition prévue.

Le procédé d'application des recouvrements s'avère ainsi très coûteux, en raison des conditions des opérations à réaliser et des moyens nécessaires pour l'exécution de celles-ci.

Par ailleurs, un exemple connu de matériau laminaire de recouvrement est divulgué dans la demande de brevet européen n° EP 11800431 A1. Ce matériau est obtenu par laminage d'un substrat, d'un film avec des particules incorporées, et d'un film imprimé.

### Objet de l'invention

Selon la présente invention, une installation telle que définie dans la revendication 1 annexée est proposée. Cette installation permet d'effectuer en continu la préparation des matériaux laminaires de recouvrement, ce qui permet de mettre lesdits éléments dans les conditions de leur finition finale, pour l'intégration sur les éléments d'application sans qu'une autre opération postérieure soit nécessaire.

L'installation préconisée comprend une succession d'étapes opérationnelles, par lesquelles le matériau de recouvrement à préparer passe en continu, y compris une étape d'alimentation du matériau laminaire, une étape de teinture de la surface du matériau, une étape d'impression de la surface teinte, une étape de recouvrement de la surface imprimée et une étape de réception du matériau terminé, le matériau laminaire étant maintenu sur une table aspirante au cours de la teinture et de l'impression.

L'alimentation du matériau laminaire d'application s'effectue par un dévidage en continu depuis une bobine d'alimentation, en passant par un calandrage de préparation de la surface du matériau.

La teinture de la surface du matériau s'effectue au moyen d'une ou plusieurs têtes de teinture, selon les conditions de surface du matériau et la nuance de couleur désirée, en passant par des brosses de distribution et d'introduction de la teinture sur le matériau, ainsi que par un calandrage postérieur qui prépare la surface teinte.

L'impression de la surface du matériau s'effectue à son tour au moyen d'une ou plusieurs têtes d'impression, selon l'impression à appliquer, en passant également par un calandrage postérieur qui prépare la surface dotée de l'impression appliquée.

Le recouvrement de la surface imprimée s'effectue par application d'une couche de colle/vernis et d'une couche de vernissage final, ces couches établissant une couverture de protection de la surface imprimée et conférant une consistance au matériau laminaire porteur pour son application.

La réception du matériau terminé s'effectue par enroulage sur une bobine de stockage, un film de recouvrement de protection étant incorporé sur la surface du matériau laminaire traité pour l'enroulage.

On obtient ainsi une installation qui permet de réaliser la préparation de matériaux laminaires de recouvrement, suivant un procédé très rapide et efficace, sans les inconvénients de dépendance des éléments d'application, de telle sorte que ladite installation présente des caractéristiques avantageuses qui lui confèrent une autonomie et un caractère préférentiel pour l'application à laquelle elle est destinée.

### Description des figures

La figure 1 montre un schéma général d'une installation préconisée.
La figure 2 est un détail agrandi de l'étape d'alimentation du matériau laminaire à traiter dans l'installation.
La figure 3 est un détail agrandi de l'étape de teinture de la surface du matériau laminaire.
La figure 4 est un détail agrandi de l'étape d'impression sur le matériau laminaire.
La figure 5 est un détail agrandi de l'étape de recouvrement final du matériau laminaire.
La figure 6 est un détail de l'étape de réception du matériau laminaire préparé.

### Description détaillée de l'invention

L'invention a pour objet une installation pour effectuer la préparation de matériaux laminaires destinés au recouvrement de surface de pièces telles que des panneaux ou moulures, à des fins d'esthétique et/ou de protection, et détermine un ensemble fonctionnel qui permet d'exécuter en continu le processus complet de préparation desdits matériaux laminaires de recouvrement, indépendamment de leur application.

L'installation préconisée comprend une succession d'étapes opérationnelles qui remplissent consécutivement différentes fonctions par rapport au matériau laminaire (1) à traiter, à partir d'une étape d'alimentation (2), depuis laquelle le matériau laminaire (1) est conduit dans un processus qui comprend une étape (3) de teinture, une étape (4) d'impression et une étape (5) de recouvrement, avec pour finir une étape (6) de réception du matériau (1.1) fini.

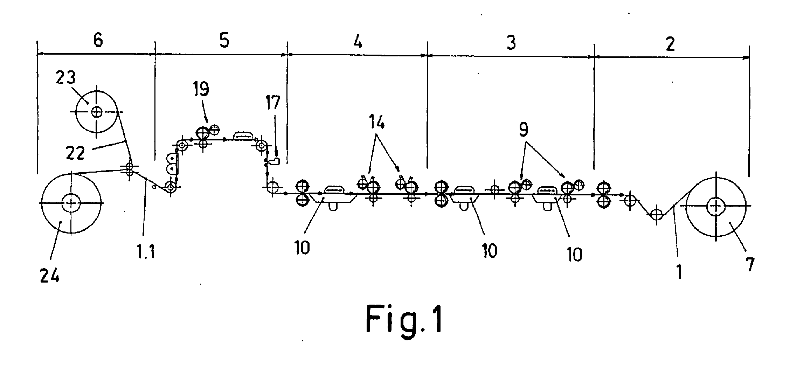

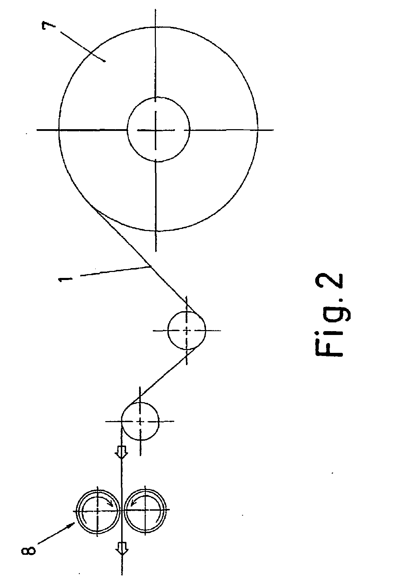

L'alimentation du matériau laminaire (1) à traiter s'effectue (figures 1 et 2) par débobinage depuis une bobine (7) d'alimentation, le matériau laminaire (1) passant, après le débobinage, par un calandrage (8) qui réalise une opération de lissage et de calibrage de la surface pour le processus de traitement postérieur. Le calandrage (8) peut être effectué avec des rouleaux froids ou chauffés, selon le type de matériau laminaire (1) en question.

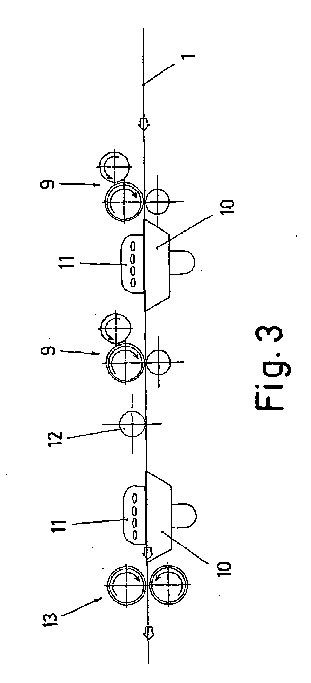

Dans l'étape (3) de teinture (figures 1 et 3), une application de teintes est réalisée sur la surface du matériau laminaire (1), pour doter ladite surface de la couleur ou de la nuance de couleur désirée. A cette fin, la teinture s'effectue au moyen d'une ou plusieurs têtes (9) d'application de teintes, en fonction de la couleur initiale que possède la surface du matériau laminaire (1) et de la couleur désirée pour cette surface.

Au cours de ladite étape (3) de teinture, le matériau laminaire (1) est maintenu sur des tables aspirantes (10) de sorte qu'il garde une position adéquate par rapport aux têtes (9) d'application des teintes, tandis qu'à la suite de chaque application de teinte sont disposées des unités respectives (11) de séchage , qui peuvent être à air chaud sous pression, des lampes infrarouges, ou toute autre technique conventionnelle.

Dans ladite étape (3) de teinture, sont en outre disposées des brosses rotatives (12), lesquelles distribuent la teinte sur la surface d'application, en la faisant pénétrer dans cette surface quand le matériau est poreux ; tandis qu'à la fin de l'étape (3) de teinture, le matériau laminaire (1) passe à son tour par un calandrage (13) qui lisse et calibre à nouveau la surface teintée.

Après la teinture de coloration de la surface du matériau laminaire (1), dans l'étape (4), une impression est réalisée sur ladite surface de manière à appliquer les graphismes désirés.

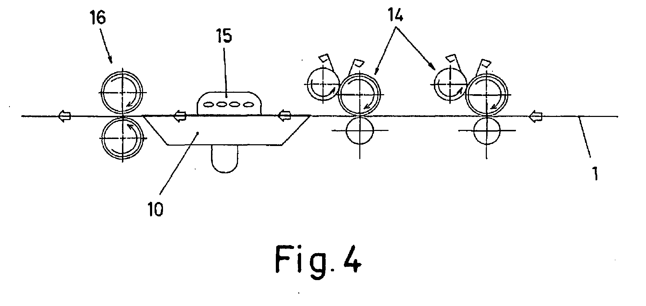

L'application de l'impression (figures 1 et 4) s'effectue également au moyen d'une ou plusieurs têtes d'impression (14), qui peuvent être à héliogravure, à rouleau à cliché, à projection d'encre, etc., en fonction du matériau et du type d'impression désiré.

De la même manière, au cours de l'impression, le matériau laminaire (1) est maintenu sur une table aspirante (10), ce qui permet d'obtenir une position stable du matériau laminaire (1) par rapport aux têtes d'impression (14), pour la précision de l'impression.

Après l'impression, un séchage est également réalisé, au moyen d'une unité (15) à air chaud sous pression, de lampes infrarouges ou d'une autre technique traditionnelle, le matériau laminaire (1) passant à son tour, après l'impression, par un calandrage (16) qui supprime les irrégularités de surface occasionnées par l'impression.

Dans l'étape (5), est appliqué sur le matériau laminaire (1) imprimé un recouvrement de protection de la surface dotant le matériau laminaire (1) d'une consistance résistante pour son application.

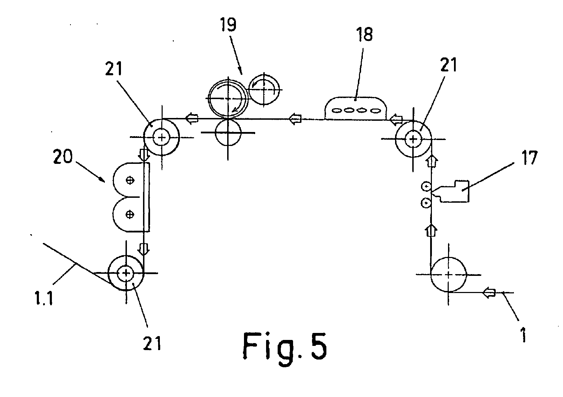

Ledit recouvrement de protection (figures 1 et 5) comprend l'application d'une couche de colle/vernis, au moyen d'une tête (17), ladite couche étant séchée par une unité de séchage (18), et l'application postérieure d'un vernissage final, par une tête d'application (19), ledit vernissage étant à son tour séché par une unité de séchage (20). Au cours de cette étape (5), il est prévu de faire passer le matériau laminaire (1) par des rouleaux réfrigérés (21), au moyen desquels sont adaptées les conditions thermiques pour le séchage des couches de recouvrement, et de ce matériau laminaire fini (1.1) pour la réception de celui-ci.

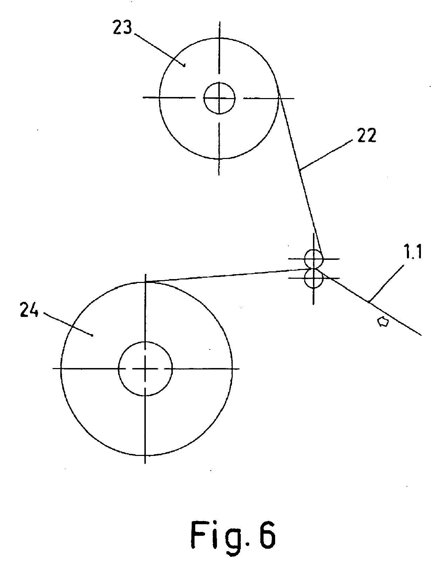

On obtient ainsi un matériau laminaire fini (1.1) sur la face traitée duquel est appliqué (figures 1 et 6) un film protecteur (22) qui est approvisionné à partir d'une bobine d'alimentation (23) et dans ces conditions, le matériau laminaire fini (1.1) est réceptionné sur une bobine de stockage (24), le film (22) protégeant la surface traitée entre les couches de l'enroulage sur ladite bobine (24), de manière à ce que le matériau laminaire fini (1.1), qui est ainsi réceptionné sur la bobine de stockage (24), puisse être directement utilisé pour le recouvrement de pièces d'application, sans avoir à réaliser aucune opération de finition après ladite application.

## Revendications

1. Installation pour la finition en continu de matériaux de recouvrement de panneaux ou de moulures, ces matériaux étant du type constitué d'un élément laminaire sur la surface duquel est appliqué un traitement de décoration et/ou de protection, cette installation comprenant un parcours de passage en continu du matériau laminaire (1) à traiter, à travers une série d'étapes opérationnelles de traitement de la surface dudit matériau laminaire (1), depuis une étape (2) d'alimentation du matériau laminaire (1) à traiter, jusqu'à une étape (6) de réception du matériau terminé (1.1), en passant par des traitements successifs de la surface du matériau laminaire (1), qui comprennent une étape (3) de teinture de la surface, une étape (4) d'impression sur la surface teinte et une étape (5) d'application d'un recouvrement de protection sur la surface imprimée, l'installation étant **caractérisée en ce que** le traitement de teinture de la surface du matériau laminaire (1) s'effectue au moyen d'une ou plusieurs têtes (9) d'application de teinte, une unité (11) de séchage étant disposée derrière chacune desdites têtes (9), le matériau laminaire (1) teinté passant par des brosses rotatives (12) qui distribuent et font pénétrer la teinte dans le matériau, et par un calandrage (13) qui prépare la surface pour le traitement postérieur.

2. Installation pour la finition en continu de matériaux de recouvrement de panneaux ou de moulures, selon revendication 1, dans laquelle l'approvisionnement du matériau laminaire (1) à traiter s'effectue à partir d'une bobine (7) d'alimentation, le matériau laminaire (1) passant, après le débobinage, par un calandrage (8) qui prépare la surface pour le traitement postérieur.

3. Installation pour la finition en continu de matériaux de recouvrement de panneaux ou de moulures, selon la revendication 1 ou 2, dans laquelle le traitement d'impression de la surface du matériau laminaire (1) s'effectue au moyen d'une ou plusieurs têtes d'impression (14), avec une unité (15) de séchage derrière l'application de l'impression, et un calandrage (16) qui prépare la surface dotée de l'impression.

4. Installation pour la finition en continu de matériaux de recouvrement de panneaux ou de moulures, selon l'une quelconque des revendications 1 à 3, dans laquelle le recouvrement de protection sur la surface imprimée du matériau laminaire (1) comprend l'application d'une couche de colle/vernis, au moyen d'une tête d'application (17), et l'application d'un vernissage, au moyen d'une tête de vernissage (19), avec, derrière chacune desdites têtes (17 et 19), une unité de séchage (18 et 20) pour sécher les couches de recouvrement appliquées.

5. Installation pour la finition en continu de matériaux de recouvrement de panneaux ou de moulures, selon l'une quelconque des revendications 1 à 4, dans laquelle la réception du matériau terminé (1.1) s'effectue par enroulage sur une bobine de stockage (24), un film de protection (22) qui est approvisionné à partir d'une bobine (23) d'alimentation, étant intégré, préalablement audit enroulage, sur la surface traitée du matériau terminé (1.1).

6. Installation pour la finition en continu de matériaux de recouvrement de panneaux ou de moulures, selon les revendications 1 et 3, dans laquelle le matériau laminaire (1) est maintenu sur des tables aspirantes (10) au cours des traitements de teinture et d'impression.

## Claims

1. An installation for continuously finishing materials for covering panels or moldings, the materials being of the type constituted by a laminar element having decorative and/or protective treatment applied to its surface, the installation comprising a path along which the laminar material (1) for treatment passes continuously through a series of operational steps of treating the surface of said laminar material (1), from a step (2) of feeding the laminar material (1) for treatment, to a step (6) of receiving the finished material (1.1), and passing via successive treatments of the surface of the laminar material (1), comprising a step (3) of dyeing the surface, a step (4) of printing on the dyed surface, and a step (5) of applying a protective covering on the printed surface, the installation being **characterized in that** the dyeing treatment of the surface of the laminar material (1) is performed by means of one or more or dye-applicator heads (9), a drying unit (11) being arranged after each of said heads (9), the dyed laminar material (1) passing via rotary brushes (12) that distribute the dye over the material and cause it to penetrate into the material, and by calendering (13) that prepares the surface for the subsequent treatment.

2. An installation for continuously finishing materials for covering panels or moldings, according to claim 1, wherein the laminar material (1) for treatment is delivered from a feed reel (7), the laminar material (1), after unreeling, passing via calendering (8) that prepares the surface for the subsequent treatment.

3. An installation for continuously finishing materials for covering panels or moldings, according to claim 1 or claim 2, wherein the treatment of printing the surface of the laminar material (1) is performed by means of one or more print heads (14), with a dryer unit (15) after the application of printing, and calendering (16) that prepares the surface provided with the printing.

4. An installation for continuously finishing materials for covering panels or moldings, according to any one of claims 1 to 3, wherein the protective covering on the printed surface of the laminar material (1) comprises applying a layer of adhesive/varnish by means of an applicator head (17), and applying varnish by means of a varnishing head (19) with a dryer unit (18, 20) after each of said heads (17, 19) for drying the applied covering layers.

5. An installation for continuously finishing materials for covering panels or moldings, according to any one of claims 1 to 4, wherein the finished material (1.1) is received by winding onto a storage reel (24), a protective film (22) that is supplied from a feed reel (23) being incorporated, prior to said winding, onto the treated surface of the finished material (1.1).

6. An installation for continuously finishing materials for covering panels or moldings, according to claims 1 and 3, wherein the laminar material (1) is held on suction tables (10) during the coloring and printing treatments.

## Patentansprüche

1. Anlage für die kontinuierliche Endbearbeitung von Materialien zur Verkleidung von Paneelen oder Leisten, wobei diese Materialien vom Typ bestehend aus einem Schichtelement sind, auf dessen Oberfläche eine Dekorations- und/oder Schutzbehandlung angewandt wird, wobei diese Anlage eine Strecke für den kontinuierlichen Durchlauf des zu behandelnden Schichtmaterials (1) durch eine Reihe von Verfahrensschritten zur Behandlung der Oberfläche des Schichtmaterials (1) umfaßt, von einem Schritt (2) zum Zuführen des zu behandelnden Schichtmaterials (1), über aufeinanderfolgende Behandlungen der Oberfläche des Schichtmaterials (1), die einen Schritt (3) zum Färben der Oberfläche, einen Schritt (4) zum Bedrucken der gefärbten Oberfläche sowie einen Schritt (5) zum Aufbringen eines Schutzüberzugs auf die bedruckte Oberfläche umfassen, bis hin zu einem Schritt (6) zur Aufnahme des fertigbearbeiteten Materials (1.1), wobei die Anlage **dadurch gekennzeichnet ist, daß** die Behandlung zum Färben der Oberfläche des Schichtmaterials (1) mittels eines oder mehrerer Köpfe (9) zum Auftragen von Farbe erfolgt, wobei eine Trocknungseinheit (11) hinter jedem der Köpfe (9) angeordnet ist, wobei das gefärbte Schichtmaterial (1) umlaufende Bürsten (12), die die Farbe verteilen und in das Material eindringen lassen, sowie einen Kalander (13), der die Oberfläche für die Nachbehandlung vorbereitet, durchläuft.

2. Anlage für die kontinuierliche Endbearbeitung von Materialien zur Verkleidung von Paneelen oder Leisten, nach Anspruch 1, wobei das Bereitstellen des zu behandelnden Schichtmaterials (1) von einer Zuführspule (7) aus erfolgt, wobei das Schichtmaterial (1) nach dem Abspulen einen Kalander (8) durchläuft, der die Oberfläche für die Nachbehandlung vorbereitet.

3. Anlage für die kontinuierliche Endbearbeitung von Materialien zur Verkleidung von Paneelen oder Leisten, nach Anspruch 1 oder 2, wobei die Behandlung des Bedruckens der Oberfläche des Schichtmaterials (1) mittels eines oder mehrerer Druckköpfe (14), mit einer Trocknungseinheit (15) nach dem Aufbringen des Aufdrucks und einem Kalander (16), der die mit dem Aufdruck versehene Oberfläche vorbereitet, erfolgt.

4. Anlage für die kontinuierliche Endbearbeitung von Materialien zur Verkleidung von Paneelen oder Leisten, nach einem der Ansprüche 1 bis 3, wobei die Schutzbeschichtung auf der bedruckten Oberfläche des Schichtmaterials (1) das Aufbringen einer Kleber/Lack-Schicht mittels eines Auftragkopfes (17) sowie das Auftragen einer Lackierung mittels eines Lackierungskopfes (19) umfaßt, wobei hinter jedem der Köpfe (17 und 19) eine Trocknungseinheit (18 und 20) zum Trocknen der aufgetragenen Deckschichten angeordnet ist.

5. Anlage für die kontinuierliche Endbearbeitung von Materialien zur Verkleidung von Paneelen oder Leisten, nach einem der Ansprüche 1 bis 4, wobei die Aufnahme des fertigbearbeiteten Materials (1.1) durch Aufwickeln auf eine Aufbewahrungsspule (24) erfolgt, wobei vor dem Aufwickeln ein Schutzfilm (22), der von einer Zuführspule (23) aus bereitgestellt wird, auf der behandelten Oberfläche des fertigbearbeiteten Materials (1.1) integriert wird.

6. Anlage für die kontinuierliche Endbearbeitung von Materialien zur Verkleidung von Paneelen oder Leisten, nach den Ansprüchen 1 und 3, wobei das Schichtmaterial (1) im Laufe der Behandlungen des Färbens und Bedruckens auf Saugtischen (10) gehalten wird.
